(19) Europäisches Patentamt
European Patent Office
Office européen des brevets

(11) **EP 0 605 192 B1**

(12) **EUROPEAN PATENT SPECIFICATION**

(45) Date of publication and mention
of the grant of the patent:
**29.05.1996 Bulletin 1996/22**

(51) Int. Cl.⁶: $B60C\ 15/00$, $B60C\ 15/02$

(21) Application number: **93310437.4**

(22) Date of filing: **22.12.1993**

(54) **Pneumatic tyre**

Luft-Reifen

Bandage pneumatique

(84) Designated Contracting States:
**DE FR GB**

(30) Priority: **28.12.1992 JP 358570/92**

(43) Date of publication of application:
**06.07.1994 Bulletin 1994/27**

(73) Proprietor: **SUMITOMO RUBBER INDUSTRIES LIMITED**
**Chuo-ku Kobe-shi Hyogo 651 (JP)**

(72) Inventors:
• **Matsuura, Shinichi**
**Osaka-shi, Osaka (JP)**

• **Tagashira, Kenji**
**Kobe-shi, Hyogo (JP)**

(74) Representative: **Stewart, Charles Geoffrey**
**SP TYRES UK LIMITED**
**Technical Division**
**Fort Dunlop, Erdington, Birmingham B24 9QT (GB)**

(56) References cited:
FR-A- 1 127 632          FR-A- 2 252 223
FR-A- 2 548 970          GB-A-  831 601
US-A- 3 229 744

## Description

The present invention relates to a pneumatic tyre that is particularly adapted for mounting on rim by an automatic tyre/rim mounting machine utilising mechanical force..

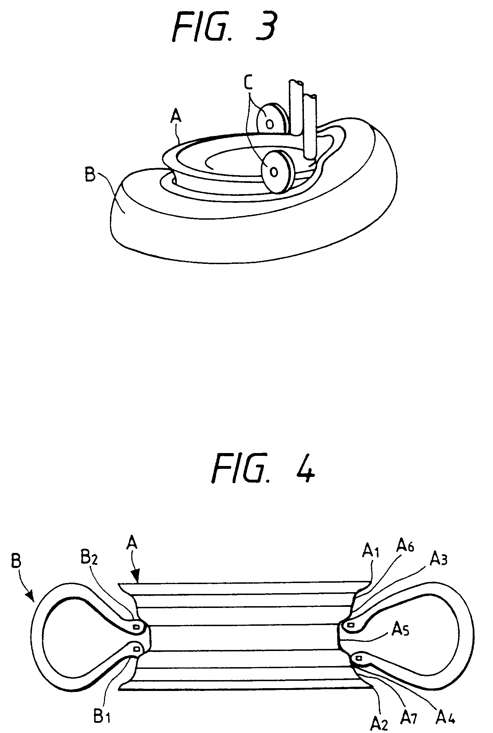

Mounting tyres on rims with automatic tyre/rim mounting machine using mechanical force is a practice that is used increasingly today. Figure 3 shows an exemplary case of using such an automatic machine to mount a pneumatic tyre on a wheel of the type having a pair of axially spaced apart bead seats each with an adjacent tyre rim/flange adjacent the tyre contacting portion of each bead seat retaining hump and between the two bead seats a tyre fitting well.

As shown, the wheel indicated by A is placed in such a way that the bead seats lie horizontally. Then, the tyre B is placed over and above the wheel A and the bead $B_1$ which is located in the lower position (i.e., the bead on the rear of the tyre) is first caused to traverse the upper rim flange $A_1$ and the upper hump $A_3$ so that it is positioned in the well $A_6$ between the upper and lower humps $A_3$ and $A_4$ respectively. Subsequently, bead $B_2$ which is located in the upper position (i.e., the bead on the front of the tyre) is pressed down by means of expanding rollers C so that the bead is caused to traverse the upper rim flange $A_1$ and hump $A_3$ to become positioned in the well $A_5$. Thereafter, the tyre is inflated so that the beads $B_1$ and $B_2$ on the front and back of the tyre respectively, traverse the humps $A_3$ and $A_4$ in the upper and lower positions, respectively, so that they engage both with their respective bead seats $A_3$ between the rim flange $A_1$ and the hump $A_3$ and $A_7$ between the rim flange $A_2$ and the hump $A_3$.

The conventional pneumatic tyre, however, has the problem that when one attempts to mount it on the wheel A having the two such dish like rims connected as shown and described, part of the bead $B_1$ on the back which has first been caused to be located in the well $A_5$, is not the right position but it is partly caused to stop as it lies on the hump $A_4$ in the lower position. If it is the bead $B_2$ on the front side has that run onto the upper hump $A_3$, one may tread upon it by foot or otherwise press it down to ensure it becomes positioned correctly in the well $A_5$.

If a part of the bead $B_1$ on the rear of the tyre becomes positioned like this on the hump $A_4$, the rotational axis of the tyre B will not coincide with that of the wheel A and the tyre B becomes eccentric with the rim (wheel A) as shown in Figure 4, so that a bad and often insufficient engagement occurs between the two components when the tyre B is inflated.

If one attempts to solve this problem by increasing the inside diameter of the bead $B_1$ on the back of the tyre so that it will more readily ride across the hump $A_4$ the force of engagement that develops after inflating the tyre decreases to such a level that the bead is offset from the bead seat on the rim, thereby causing rim offset.

A tyre according to the preamble of claim 1 is known from FR-A-2 548 970.

An object, therefore, of the present invention is to provide a pneumatic tyre that can be mounted on a wheel rim with an assured good engagement whilst preventing the occurrence of rim offsets.

Accordingly the invention provides a pneumatic tyre comprising an annular tread (2), a sidewall (3) that extends radially from both edges of the tread (2), and a bead portion (4) that is formed at the inner radial end of each sidewall, wherein the bead portions (4) on the right and left sides of a section of a tyre including the axis of rotation are different in shape with the difference between the two bead portions in terms of the angle of toe portion $\theta$ exceeding 0° but being not more than 4° and wherein the bead portion having the greater angle $\theta$ of toe portion is formed to have a greater bead base diameter $\phi$ than the other bead portion.

In a preferred embodiment of the invention, the two bead portions are adapted to have the same heel length d.

In another preferred embodiment of the invention, the two bead portions are adapted to be equal in terms of both the bead toe position and the bead length D.

In accordance with the present invention the bead portions on the right and left sides of the tyre are adapted to be different in shape and the difference between the two bead portions in terms of the angle $\varnothing$ of the toe portion is controlled to exceed 0° both to be not more than 4° while, at the same time, the bead portion having the greater angle $\phi$ than the other bead portion. This arrangement ensures that when mounting the pneumatic tyre on a rim if the bead portion having the greater angle $\phi$ of toe portion is first brought into engagement with the rim so that it is positioned correctly within the well then upon subsequent inflation of the tyre, the bead portion is displaced from within the well to ride across the hump smoothly and equally around the tyre until it comes into engagement with the bead seat.

Further aspects of the present invention will become apparent from the following description of an embodiment by way of example and in which:-

Figure 1 is a sectional view showing enlarged the essential parts of a pneumatic tyre according to the present invention;
Figure 2 shows a section including the rotational axis of the tyre
Figure 3 is a perspective view illustrating how a tyre is mounted on a rim: and
Figure 4 shows a section of figure 3

The pneumatic tyre generally indicated by 1 comprises an annular tread 2, a pair of sidewalls 3 extending radially inwards from opposite edges of the tread 2; an annular bead position that is formed at the radially inner edge of each sidewall 3; and annular bead core 5 embedded in the bead portion 4; an annular breaker belt 6 under the tread 2 extending circumferentially around the tyre; a carcass 7 extending around the tyre under the belt and through the sidewalls 3 to be turned up at both edges around the bead core 5 from the inside to the outside and a rubber bead apex 8 of a generally triangular cross section in shape provided at the external radial side of each bead core 5 between the carcass 7 and its turnup portion 71.

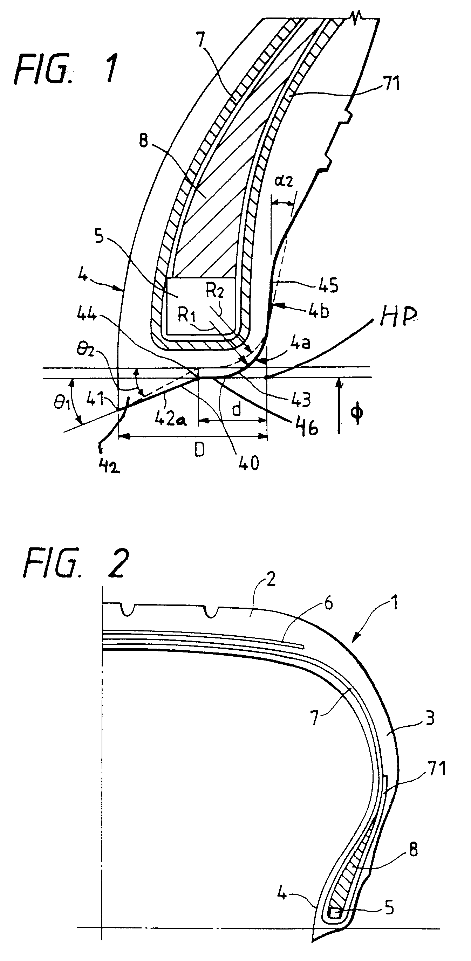

Referring now to Figure 1 which is a sectional view showing the essential part of the pneumatic tyre enlarged, the bead base 40 which is the part of the bead and which seats on the wheel rim bead seat (nor shown) comprises a bead toe portion which extends axially and radially inwardly to a bead toe 41 at the internal axial end of the bead portion 4. The bead also has a radially bead heel 43 and a flange contacting region 45.

In Figure 1 one tyre bead is shown by a solid line, 4a and the other tyre bead to the other tyre is shown by a broken line 4b. Initially only the solid line tyre bead will be described. The bead base 40 comprises a flat cylindrical bead base surface 46 under the bead core 5, and an axially and radially inwardly projecting bead toe portion 42, terminating at a bead toe 41. The bead toe portion 42 has a bead toe surface 42a which joins the bead base 46 at a point 44. The bead heel 43 has a radius of curvature R1, the bead flange portion 45 is at an acute angle $\alpha_2$ to the vertical bead reference line. The diameter $\phi$ is the diameter of the bead at the point 44.

The following symbols are used to designate the parameters of various parts of the bead: $\phi$ is the bead base diameter at the diameter of a junction point 44 between the bead toe surface 42a and the bead base 46; d is the bead base length which is the axial distance from the junction point 44 to the bead heel point H.P; D is the bead width from the heel point HP to the toe 41 in the axial direction; $\theta$ is the angle of the toe surface 42a to the axis of the tyre; $\alpha$ is the flange contact angle which is the angle the flange contact region 45 makes to a plane parallel to the equatorial plane of the tyre; and R is the radius of curvature of the bead heel portion.

As explained for the purpose of the present discussion, the side of the tyre 1 which is first mounted on the rim (i.e. the lower side in Figures 3 and 4) is called the "back or rear side" and the side of the tyre 1 which is later mounted on the rim (i.e. the upper side in Figures 3 and 4) is called the "front side". The bead portion 4a on the front side (as indicated by the solid line in Figure 1) has a bead base diameter $\phi_1$, toe portion angle $\theta_1$, a flange contact portion angle $\alpha_1$ and a heel portion radius $R_1$, whereas the bead portion 4b on the back side (as indicated by the dashed line in Figure 1) has a bead base diameter $\phi_2$, a toe portion angle $\theta_2$, a flange contact portion angle $\alpha_2$ and a heel portion radius $R_2$. According to the present invention, the bead portion 4a on the front side has a different shape to the bead portion 4b on the back side and the following two relationships hold between the two bead portions.

It should be noted here that in the embodiment under consideration, the bead width D and the bead base length d are equal on the front and back sides. Further, the radial and axial position of the bead toe 41 on the front side is the same as that of the bead toe 41 on the back side (namely, the inside diameter of the bead toe surface 42 is the same for both the front and back sides). Also the radius R of the heel portion 43 is equal for both sides i.e. ($R_1=R_2$).

The first condition to be met is that the angle $\theta_2$ of the toe portion surface on the back side is greater than the angle $\theta_1$ of the toe portion surface on the front side, with the difference between the two angles being not more than 4° $(4° \geqq (\theta_2-\theta_1) > 0°)$

If the angle $\theta_2$ of the toe portion surface on the back side is equal to the angle $\theta_1$ of the toe portion on the front side $(\theta_2-\theta_1=0°)$, the bead width D and the bead base length d are each the same on the back and front sides. In other words, the bead portions 4a and 4b on the front and back sides, respectively, are the same in shape and the bead portion 4b on the back side is prone to engage onto the hump of the rim on the back side and poor engagement will result to increase the chance of air leakage. This is the case in the prior art.

If the difference between the angles of the two toe portions $(\theta_2-\theta_1)$, exceeds 4° i.e. $(\theta_2-\theta_1)>4°$, the rigidity of the bead toe portion 42 of the bead portion 4b on the back side is decreased and the force of sticking to the bead seat on the rim is too small resulting in rim offset.

If the angle $\theta_2$ of the toe portion on the back side is made smaller than the angle $\theta_1$ of the toe portion on the front side $(\theta_2-\theta_1<0°)$, the bead base diameter $\phi_2$ on the back side is decreased, making it difficult for the bead portion 4b on the back side to ride across the hump of the rim on the back side. On the other hand, such a bead portion is liable to run onto its hump. As a result, no improvement is achieved in the precision of engagement and the chance of occurrence of poor engagement is increased.

The second condition to be met is that the bead base diameter $\phi_2$ on the back side is greater than the bead base diameter $\phi_1$ on the front side $(\phi_2>\phi_1)$. Preferably, the difference between the bead base diameters on the two sides $(\phi_2-\phi_1)$ is 2 mm or less $(\phi_2-\phi_1 \leqq 2 mm)$.

Considering first the case where the bead base diameter $\phi_2$ on the back is smaller than the bead base diameter $\phi_1$ on the front side $(\phi_2>\phi_1)$ if the bead base diameter $\phi_2$ on the back side is unduly small, it will be difficult for the bead portion on the back side 4b to engage effectively on the rim and such a bead portion is prone to run onto the hump, thereby deteriorating the precision of engagement. If the bead base $\phi_1$, is excessive, the force by which the bead portion 4a on the front side will stick to the bead seat of the rim is too small causing not only a rim offset but also air leakage.

Considering next the case where the difference between the bead base diameter on the front and back sides $(\phi_2-\phi_1)$ exceeds 2mm $(\phi_2-\phi_1>2 mm)$, the effect of this case is either that the bead base diameter $\phi_1$ on the front side is unduly small or that the bead base diameter $\phi_2$ on the back side is excessive. If the former is the case, an extremely great force is required for the bead portion 4a on the front side to establish effective engagement with the rim, thus lowering the precession of engagement. If the latter is the case, the force by which the bead portion 4b on the back side will stick to the bead seat of the rim will drop to cause not only a rim offset but also air leakage.

If desired, the flange contact angle $\alpha$ may be adjusted to range from 0 (inclusive) to 2° (inclusive) and in this case, the bead portion 4 will readily move from the well in the wheel so that it can be easily moved to the bead seat. If the contact angle $\alpha$ exceeds 2° the force of contact with the rim flange will drop, thereby reducing the precision of engagement, on the other hand, if the contact angle $\alpha$ is less than zero degrees, it will be difficult for the bead portion 4 to disengage from the well in the wheel, which also causes deterioration in the precision of engagement.

Shown below in Table 1 are the specifications of two tyres of the size 215/60R15, one being constructed in accordance with a example of the present invention and the other using a conventional structure. The structural features other than the shape of the bead portion, the materials, used and the patterns employed were commonly shared by the two tyres.

TABLE 1

| | Example | | Comparative Example | |
|---|---|---|---|---|
| | back side | front side | back side | front side |
| $\theta$ | $\theta_2=20°$ | $\theta_1=17°$ | $\theta_2=17°$ | $\theta_1=17°$ |
| $\phi$ | $\phi_2=378.2$ mm | $\phi_1=377.3$ mm | $\phi_2=377.3$ mm | $\phi_1=377.3$ mm |
| d | d=6.4 mm | d=6.4 mm | d=6.4 mm | d=6.4 mm |
| D | D=14.5 mm | D=14.5 mm | D=14.5 mm | D=14.5 mm |
| $\alpha$ | $\alpha_2=2°$ | $\alpha_1=0°$ | $\alpha_2=2°$ | $\alpha_1=0°$ |
| R | $R_2=6.4$ mm | $R_1=6.4$ mm | $R_2=6.4$ mm | $R_1=6.4$ mm |
| Notes: $\theta$ is the angle of the toe portion: $\phi_1$ the bead base diameter; d the length of the heel portion; D the bead base length: $\alpha$ is the contact angle; R is the radius of the heel portion. | | | | |

Having the construction described herein above, the present invention offers the following advantages.

The bead portion on the front and back or the right and left sides of the tyre are adapted to be different in shape and the difference between the two bead portions in terms of the angle of the toe portion is controlled to exceed 0° but not be more than 4° while, at the same time, the bead portion having the greater angle of toe portion $\theta$ is formed to have a greater bead base diameter $\phi$ than the other bead portion. This arrangement ensures that when mounting the pneumatic tyre on a rim, the bead portion having the greater angle of toe portion $\theta$ can first be brought into engagement with the rim where it seats smoothly within the well and, upon subsequent inflation of the tyre, the bead portion is displaced from within the well to ride across the hump smoothly until it comes into full and proper engagement with the bead seat to give a uniform assembly.

**Claims**

1. A pneumatic tyre comprising an annular tread (2), a sidewall (3) that extends radially from both edges of the tread (2), and a bead portion (4) that is formed at the inner radial end of each sidewall, characterized in that the bead portions (4) on the right and left sides of a section of a tyre including the axis of rotation are different in shape with the difference between the two bead portions in terms of the angle ($\theta$) of toe portion (42) exceeding 0° but being not more than 4° and wherein the bead portion having the greater angle ($\theta$) of toe portion (42) is formed to have a greater bead base diameter $\phi$ than the other bead portion.

2. A tyre according to claim 1 characterised in that the bead portion (4) comprises a bead base (40), a bead heel (43) and a flange contacting region (45) the bead base (40) comprising an axially extending bead base (46) having a diameter $\phi$ at the junction (44) to an axially inner bead toe surface (42a) and an axially and radially inwardly projecting bead toe (42) having said bead toe surface 42a which is at an angle ($\theta_2$) to the axial direction, the bead heel (43) having a radius of curvature R and the flange contacting region extending radially and axially outwards at contact angle ($\alpha$) to a plane parallel to the equatorial plane of the tyre wherein the two bead portions are of a different shape.

3. A tyre according to claim 1 or 2 characterised in that the two bead base lengths d are the same length.

4

4. A pneumatic tyre according to claim 1, 2 or 3 characterised in that the two bead portions are adapted to be equal in terms of both the bead toe position and the bead base length D.

## Patentansprüche

1. Ein Luftreifen mit einer ringförmigen Lauffläche (2), einer Seitenwand (3), die sich radial von beiden Kanten der Lauffläche (2) erstreckt, und einem Wulstteil (4), der bei dem inneren radialen Ende jeder Seitenwand ausgebildet ist, dadurch gekennzeichnet, daß die Wulstteile (4) auf den rechten und linken Seiten eines Abschnitts eines Reifens, der die Drehachse einschließt, eine unterschiedliche Form aufweisen, wobei die Differenz zwischen den zwei Wulstteilen hinsichtlich des Winkels ($\theta$) von Zehenteil (42) 0° überschreitet, aber nicht mehr als 4° beträgt und worin der Wulstteil mit dem größeren Winkel ($\theta$) von Zehenteil (42) so ausgebildet ist, daß er einen größeren Wulstbasisdurchmesser $\phi$ als der andere Wulstteil aufweist.

2. Ein Reifen nach Anspruch 1, dadurch gekennzeichnet, daß der Wulstteil (4) eine Wulstbasis (40), eine Wulstferse (43) und einen Flanschkontaktierbereich (45) aufweist, wobei die Wulstbasis (40) eine sich axial erstreckende Wulstbasis (46) mit einem Durchmesser $\phi$ bei dem Übergang (44) zu einer axial inneren Wulstzehenfläche (42a) und eine axial und radial nach innen vorspringende Wulstzehe (42) mit der Wulstzehenfläche 42a umfaßt, welche unter einem Winkel ($\theta_2$) zur Axialrichtung liegt, wobei die Wulstferse (43) einen Krümmungsradius R aufweist und der Flanschkontaktierbereich sich radial und axial nach außen unter einem Kontaktwinkel ($\alpha$) zu einer Ebene parallel zu der Äquatorialebene des Reifens erstreckt, worin die zwei Wulstteile eine unterschiedliche Form aufweisen.

3. Ein Reifen nach Anspruch 1 oder 2,
   dadurch gekennzeichnet, daß die zwei Wulstbasislängen d die gleiche Lange aufweisen.

4. Ein Luftreifen nach Anspruch 1, 2 oder 3,
   dadurch gekennzeichnet, daß die zwei Wulstteile so ausgelegt sind, daß sie hinsichtlich sowohl der Wulstzehenposition als auch der Wulstbasislänge D gleich sind.

## Revendications

1. Pneumatique comprenant une bande de roulement annulaire (2), un flanc (3) disposé radialement depuis les deux bords de la bande de roulement (2), et une partie de talon (4) formée à l'extrémité radiale interne de chaque flanc, caractérisé en ce que les parties de talon (4) des côtés droit et gauche d'une section d'un pneumatique contenant l'axe de rotation ont des configurations différentes, la différence d'angle ($\theta$) des parties de pointe (42) des deux parties de talon étant supérieure à 0° mais ne dépassant pas 4°, et la partie de talon ayant le plus grand angle ($\theta$) de partie de pointe (42) est formée avec un plus grand diamètre $\Phi$ de base de talon que l'autre partie de talon.

2. Pneumatique selon la revendication 1, caractérisé en ce que la partie de talon (4) possède une base (40) de talon, un coin (43) de talon et une région (45) de contact avec un flasque, la base (40) de talon ayant une base (46) de talon disposée axialement et ayant un diamètre $\Phi$ à la jonction (44) avec une surface (42a) de pointe de talon axialement interne et une pointe (42) de talon dépassant axialement et dirigée radialement vers l'intérieur et ayant ladite surface de pointe de talon (42a) qui forme un angle ($\theta_2$) par rapport à la direction axiale, le coin (43) du talon ayant un rayon de courbure R et la région de contact avec le flasque étant disposée radialement et vers l'extérieur en direction axiale suivant un angle de contact ($\alpha$) avec un plan parallèle au plan équatorial du pneumatique, les deux parties de talon ayant des formes différentes.

3. Pneumatique selon la revendication 1 ou 2, caractérisé en ce que les longueurs des deux bases de talon d sont les mêmes.

4. Pneumatique selon la revendication 1, 2 ou 3, caractérisé en ce que les deux parties de talon sont les mêmes à la fois pour la position de la pointe de talon et la longueur de base de talon D.

FIG. 1

FIG. 2

# FIG. 3

# FIG. 4